# EUROPEAN PATENT SPECIFICATION

(11) **EP 0 327 347 B1**
(45) Date of publication and mention of the grant of the patent: **03.05.1995**
(21) Application number: 89300989.4
(22) Date of filing: 01.02.1989
(51) Int. Cl.: B62D 3/12, B62D 7/20, F16J 3/04

(54) **Bellows or gaiter seal for a rack and pinion steering mechanism**
Faltenbalg für Zahnstangenlenkung
Joint à soufflet ou gaine pour mécanisme de direction à crémaillère

(30) Priority: 04.02.1988 GB 8802537
(43) Date of publication of application: 09.08.1989
(73) Proprietor: ADWEST ENGINEERING LIMITED, Reading RG5 4SN, Berkshire (GB)
(72) Inventor: Millard, Barry John, Reading Berkshire (GB)
(74) Representative: Dealtry, Brian

(56) References cited:
- EP-A- 0 003 869
- DE-A- 3 633 336
- FR-A- 2 246 784
- FR-A- 2 578 934
- US-A- 2 749 757

## Description

This invention relates to bellows or gaiter seals for rack and pinion steering mechanisms.

Rack and pinion steering mechanisms generally comprise an elongate housing, a toothed rack mounted for longitudinal sliding movement in the housing, and a pinion in meshing engagement with the toothed rack and connectable to the steering control of a vehicle for rotation thereby, at least one end of the toothed rack having a tie rod connected thereto by means of a ball joint and a tie rod being connectable to the steerable road wheels of a vehicle to impart steering thereto. To prevent the loss of lubricant from the steering mechanism and the ingress of dirt or other contaminants into the steering mechanism it is usual to use a convoluted bellows or gaiter seal (hereinafter called "gaiter seal") to seal the at least one end of the housing from which said one end of the toothed rack and said tie rod extends. One end of the gaiter seal is sealingly secured to the housing and the other end is sealingly secured to the tie rod and because of its convoluted construction is capable of accommodating both the linear movements of the toothed rack and tie rod as steering is imparted to the steerable road wheels of a vehicle and articulated movements imparted to the tie rod by the steering movements and movement of the vehicle suspension. Such a rack and pinion steering mechanism is hereinafter referred to as "a steering mechanism of the kind described". A typical example is disclosed in DE-A-3 633 336 (published on 14.04.88).

Normally there is sufficient space in a vehicle to accommodate the steering mechanism and the movements of its at least one gaiter seal. However, occasions do arise, for example in vehicles with a very low bonnet line, where space is limited to such an extent that linear movement of a conventional gaiter seal cannot be accommodated and the present invention has as its object to provide, in or for a steering mechanism of the kind described, a gaiter seal which will overcome this problem.

The present invention provides a steering mechanism of the kind described wherein the gaiter seal comprises at said other end thereof a bearing in sliding engagement with the tie rod.

The invention further provides a method of sealing the at least one end of the housing of a steering mechanism of the kind described, the method comprising mounting over the ball joint a gaiter seal, sealingly securing one end of the gaiter seal to the housing and being characterised by slidingly mounting the other end of the gaiter seal is in sealing engagement with the tie rod.

In accordance with the invention, part at least of the linear movement is removed from the gaiter seal and is replaced by sliding movement between the gaiter seal and the tie rod, so enabling the size or length of the gaiter seal to be reduced and the gaiter seal to be accommodated in a smaller space. In addition wear of the gaiter seal due to continual extension and relaxation thereof is reduced.

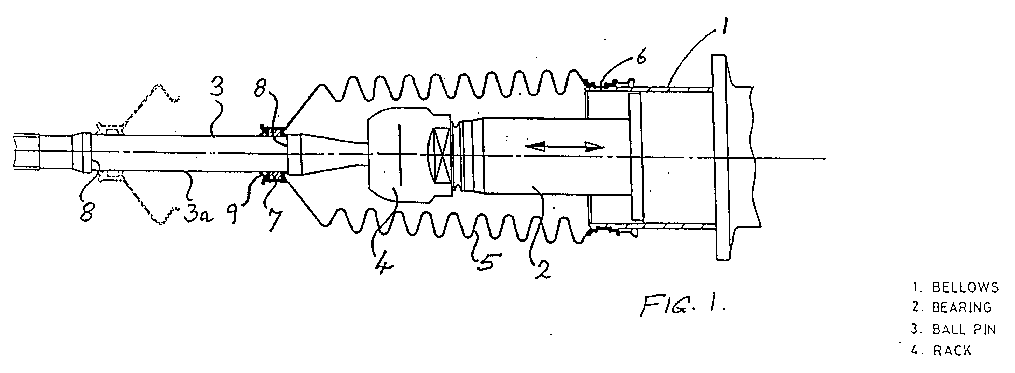

The present invention will be more particularly described with reference to the accompanying drawings in which Figure 1 is a fragmentary sectional elevation of one end of a steering mechanism of the kind described incorporating a gaiter seal according to present invention.

Referring to Figure 1 it will be seen that the steering mechanism illustrated therein comprises an elongate housing 1 having a toothed rack 2 longitudinally slidable therein and a tie rod 3 connected to the toothed rack 2 by means of a ball joint 4. To prevent the loss of lubricant from the steering mechanism and to prevent the ingress of dirt or other contaminants into the steering mechanism or ball joint 4 a gaiter seal 5 is provided which extends between the housing 1 and the tie rod 3. One end of the gaiter seal 5 is sealingly secured to the housing 1 as shown at 6, e.g. as by means of a suitable addhesive, by clamping or in any other suitable manner. The other end of the gaiter seal 5 comprises a bearing 7 which makes sliding sealing engagement with a reduced diameter portion 3a of the tie rod 3. Shoulders 8 at each end of the reduced diameter portion 3a of the tie rod 3 limit the extent of the sliding movement between the gaiter seal 5 and the tie rod 3. To provide additional sealing a sealing flange 9 is provided adjacent the bearing 7.

The gaiter seal 5 may be formed, e.g., moulded, from any suitable flexible material, such as a suitable elastomeric or plastics material.

## Claims

1. A rack and pinion steering mechanism comprising an elongate housing (1), a toothed rack (2) mounted for longitudinal sliding movement in the housing (1), a pinion in meshing engagement with the toothed rack (2) and connectable to the steering control of a vehicle for rotation thereby, a tie rod (3) connected to at least one end of the toothed rack (2) by means of a ball joint (4) and a gaiter seal (5) one end of which is sealingly secured to the housing (1) and the other end of which is sealingly secured to the tie rod (3), characterised in that the gaiter seal (5) comprises at said other end thereof a bearing (7) in sliding engagement with the tie rod (3).

2. A steering mechanism according to claim 1, wherein said tie rod (3) has a reduced diameter portion (3a) on which said bearing (7) is slidable and wherein shoulders (8) are provided at each end of the reduced diameter portion (3a) of the tie rod (3) to limit the sliding movement of said bearing (7).

3. A steering mechanism according to claim 1 or 2, wherein a sealing flange (9) is provided adjacent said bearing (7).

4. A method of sealing at least one end of the housing of a rack and pinion steering mechanism having a housing (1), a toothed rack (2) slidable in the housing (1) and a tie rod (3) connected to said one end of the toothed rack (2) by means of a ball joint (4), the method comprising mounting over said ball joint (4) a gaiter seal (5) and sealingly securing one end of the gaiter seal to the housing (1) and being characterised by slidingly mounting the other end of the gaiter seal in sealing engagement with the tie rod (3).

5. A method according to claim 4, which comprises forming a reduced diameter portion (3a) on said tie rod (3) to form shoulders (8) for limiting the sliding movement of the gaiter seal with the tie rod (3).

## Patentansprüche

1. Zahnstangenlenkung, umfassend ein langgestrecktes Gehäuse (1), eine für Längsverschiebebewegung im Gehäuse (1) gelagerte Zahnstange (2), ein mit der Zahnstange (2) kämmendes und mit der Lenkkontrolle eines Fahrzeugs für Drehung durch diese verbindbares Ritzel, eine mit mindestens einem Ende der Zahnstange (2) mittels eines Kugelgelenks (4) verbundene Spurstange (3) und eine(n) Faltenbalg oder Dichtmanschette (5), dessen bzw. deren eines Ende unter Abdichtung am Gehäuse (1) und dessen bzw. deren anderes Ende unter Abdichtung an der Spurstange (3) befestigt ist, dadurch gekennzeichnet, daß die Dichtmanschette (5) an ihrem genannten anderen Ende ein mit der Spurstange (3) in Gleiteingriff stehendes Lager (7) aufweist.

2. Lenkung nach Anspruch 1, wobei die Spurstange (3) einen Abschnitt (3a) reduzierten Durchmessers aufweist, auf welchem das Lager (7) gleitend verschiebbar ist, und wobei an jedem Ende des Abschnitts (3a) reduzierten Durchmessers der Spurstange (3) Schultern (8) zur Begrenzung der Gleitverschiebung des Lagers (7) vorgesehen sind.

3. Lenkung nach Anspruch 1 oder 2, wobei am Lager (7) ein Dichtflansch (9) vorgesehen ist.

4. Verfahren zum Abdichten mindestens eines Endes des Gehäuses einer Zahnstangenlenkung mit einem Gehäuse (1), einer im Gehäuse (1) verschiebbaren Zahnstange (2) und einer mittels eines Kugelgelenks (4) mit dem einen Ende der Zahnstange (2) verbundenen Spurstange (3), wobei das Verfahren die Schritte des Montierens einer Dichtmanschette (5) über dem Kugelgelenk (4) und des dichten Befestigens des einen Endes der Dichtmanschette am Gehäuse (1) umfaßt und dadurch gekennzeichnet ist, daß das andere Ende der Dichtmanschette (gleitend) verschiebbar in Dichtungseingriff oder -anlage mit bzw. an der Spurstange (3) montiert wird.

5. Verfahren nach Anspruch 4, bei dem an der Spurstange (3) ein Abschnitt (3a) reduzierten Durchmessers geformt wird, um Schultern (8) zum Begrenzen der Gleitbewegung der Dichtmanschette mit (auf) der Spurstange (3) zu bilden.

## Revendications

1. Mécanisme de direction à crémaillère comprenant un boîtier allongé (1), une crémaillère (2) montée en vue d'un mouvement de glissement longitudinal dans le boîtier (1), un pignon en engrènement avec la crémaillère (2) et pouvant être relié à la commande de direction d'un véhicule pour tourner par ce biais, une barre d'accouplement (3) reliée à au moins une extrémité de la crémaillère (2) au moyen d'un joint à rotule (4) et un joint à gaine (5) dont une extrémité est fixée de façon étanche au boîtier (1) et dont l'autre extrémité est fixée de façon étanche à la barre d'accouplement (3), caractérisé en ce que le joint à gaine (5) conprend à sadite autre extrémité un palier (7) en contact de glissement avec la barre d'accouplement (3).

2. Mécanisme de direction selon la revendication 1, dans lequel ladite barre d'accouplement (3) a une partie (3a) de diamètre réduit sur laquelle peut glisser ledit palier (7) et dans lequel des épaulements (8) sont prévus à chaque extrémité de la partie (3a) de diamètre réduit de la barre d'accouplement (3) de manière à limiter le mouvement de glissement dudit palier (7).

3. Mécanisme de direction selon la revendication 1 ou 2, dans lequel une bride d'étanchéité (9) est placée de façon adjacente audit palier (7).

4. Procédé de fermeture hermétique d'au moins une extrémité du boîtier d'un mécanisme de direction à crémaillère ayant un boîtier (1), une crémaillère (2) pouvant glisser dans le boîtier (1) et une barre d'accouplement (3) reliée à ladite extrémité de la crémaillère (2) au moyen d'un joint à rotule (4), le procédé comprenant le montage sur ledit joint à rotule (4) d'un joint à gaine (5) et la fixation étanche d'une extrémité du joint à gaine au boîtier (1) et étant caractérisé par le montage coulissant de l'autre extrémité du joint à gaine en contact d'étanchéité avec la barre d'accouplement (3).

5. Procédé selon la revendication 4, comprenant la formation d'une partie (3a) de diamètre réduit sur ladite barre d'accouplement (3) de manière à former des épaulements (8) destinés à limiter le mouvement de glissement du joint à gaine avec la barre d'accouplement (3).
